(19) Europäisches Patentamt / European Patent Office / Office européen des brevets

(11) **EP 2 916 544 A1**

(12) **EUROPEAN PATENT APPLICATION**

(43) Date of publication:
09.09.2015 Bulletin 2015/37

(51) Int Cl.:
$H04N\ 17/00\ ^{(2006.01)}$   $H04N\ 21/442\ ^{(2011.01)}$

(21) Application number: 14305323.9

(22) Date of filing: 06.03.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: ALCATEL LUCENT
92100 Boulogne-Billancourt (FR)

(72) Inventors:
• Wu, Tingyao
2018 Antwerpen (BE)
• Lou, Zhe
2018 Antwerpen (BE)

(74) Representative: ALU Antw Patent Attorneys
Intellectual Property and Standards
Copernicuslaan 50
2018 Antwerp (BE)

(54) **Method to determine the quality of a video stream**

(57)    A method for assessing the quality of a video session at a user client (video client) for a user watching a video stream (VS) received at said user client , comprises the steps of performing measurements of said video session for logging freeze parameters (TBFi, TEFi) upon detecting freeze occurrences taking place during play out of said video stream by a video player at said user client, for further deriving from said measurements a session interrupt indication (VEi) by detecting whether the user is further watching said video stream or not after one of said detected freeze occurrences, a step of calculating from said freeze parameters and from said session interrupt indication (VEi) a user loyalty probability parameter ($P_i$(t1<t<t2)) reflecting the probability that said user will terminate the video session within a predetermined period (t2-t1) after the latest detected freeze (i) as a quality parameter of said video session.

Fig. 1

**Description**

The present invention relates to a method to determine the quality of a video stream.

Online video traffic becomes dominant in the Internet. The Quality of Experience, hereafter abbreviated with QoE, during video watching is an important success factor in the online video market. Content providers and network providers are doing all they can to improve the QoE in order to attract more users, and to have users staying at their content or channels as long as possible, because long viewing time directly leads to larger traffic volume and the increase of revenue.

Known quality assessment techniques are based on a full reference video stream, implying that, at the receiver, both the decoded received video signal as well as the transmitted source or reference video signal are compared with each other. This is however not feasible on real deployed networks and systems and hence, such methods are restricted to laboratory tests.

Other techniques make use of a partial reference video stream, using a modified video source signal containing some markers for being compared to the decoded received signal at the receiver. Besides the fact that this method needs additional overhead by the addition of the markers to the source signal, it suffers from the same drawbacks as the previous methods using the full reference video stream.

Other existing tools only rely on the received video signal which is usually degraded. Such measuring systems do not know the original signal, but only observe the degraded signal. Therefore often errors are made by considering that some received and decoded video blocks, while correctly being received and decoded, are yet erroneously being considered as affected by network impairments. This occurs especially at borders of objects while they did form part of the original content of a video scene.

With traditional QoE metrics, Content Delivery Networks, hereafter abbreviated with CDNs, or network providers cannot provide real-time network adaptation with the intention to let users stay with the desired content as long as possible. Therefore such a QoE is not accurate enough to help business players to make the best out of it.

It is thus an object of embodiments of the present invention to propose an improved method which does not show the inherent shortcomings of the prior art methods, thus to provide a system and method to calculate the quality of a video stream in real time with the further aim to adapt the network traffic accordingly in order to make users watch the video as long as possible .

According to embodiments of the present invention this object is achieved by the method in accordance with claim 1.

In this way a new QoE metric is proposed, which introduces user loyalty impacted by amounts of number of freeze artifacts, also denoted freezes, and freeze parameters as total freezing time, freeze ratio, time of freeze occurrence and ending etc., thus by when these artifacts happen. In fact, the temporal position at which those freeze artifacts happen within the video stream can be very important. This can be seen from the following extreme example : if there are in total 10 seconds freeze in a 10 minutes video, if these 10 seconds happen at the very beginning of the video playback, the user loyalty will be totally different compared to the situation when these 10 seconds would take place at the very end of the video playback. It is evident that , with a 10-sec freeze in the very beginning of a video, a lot of users would have already given up watching the video, leading to from the content provider's perspective, user's 0 "loyalty"; while in the second case it should be close to 100% (full score).

In some embodiments the method further comprises a step of comparing said user loyalty probability parameter with a threshold, and, upon exceeding of said threshold, adapting the video session and/or next video sessions to said user client by increasing its priority.

In this way the network operator not only has an indication of the user's loyalty but can further quickly react to possibly changing loyalty or a bad loyalty by adapting the quality of the present or next video session.

In an embodiment said calculation is further based on fitting parameters of a function whereby said function is calibrated via initial measurements on several test video sequences .

Said measurements can be performed at said user client, or, alternatively in an intermediate node between a transmitter of the video steam and said user client .

The above and other objects and features of the invention will become more apparent and the invention itself will be best understood by referring to the following description of an embodiment taken in conjunction with the accompanying drawings wherein:

Fig1. shows a schematic of a video transmission channel between a transmitter and a receiver, wherein measurements are performed at a receiver as to illustrate one embodiment of the method,

Figs. 2a-c show exemplary curves of the user's loyalty, a fitting function, and a probability of a user terminating a video session in the presence of a freeze,

Fig. 3 shows measurements of the user's loyalty behavior without a freeze and in the presence of a freeze at different instances in time, measured on a live audience.

It is to be remarked that the functions of the various elements shown in the figures., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Online video traffic becomes dominant in the Internet. The Quality of Experience, hereafter abbreviated by QoE, during video watching is an important parameter in this respect.

The video engagement for a user watching a video largely depends on two aspects. The first one is the user interest to the content, the second one is the quality of experience, during video watching. Enhancing video engagement is usually desired by content/network providers.

Embodiments of the method of this invention aim to determine a new QoE parameter of a video session as experienced by a user at the client's side, and to possibly adjust the network conditions with the intention to make a user be satisfied with his viewing experience and stay with the content, thus being more loyal.

The determination of this new QoE parameter is based on measurements of the video session, more in particular in detecting freeze occurrences or events and related freeze parameters, as well as of measuring whether or not these freeze events had an impact on the user's loyalty. To this purpose it is thus also detected whether or not the user stayed watching the play out of the video, even after the freeze event.

The monitoring module for measuring the freeze events and related parameters as the duration, moment of occurrence and ending, and whether or not the user remained watching the video can be at client side, but also embodiments residing in an intermediate node or even at the server side are possible.

However in all implementations the goal of this monitoring module is to monitor the artifacts at the client side. Nevertheless techniques are described e.g. in the not yet published European patent application nr 13305743 and in published patent EP2525587 how to obtain a measure of such artifacts by measurements at the server or network side through the observed request sequence.

When measuring at the client side , this may require a modification of existing video players. Measurements performed at the network/server side are client independent, more network operator friendly, but can be less accurate compared to direct measurements at the client.

The monitored events comprise freezing of which also the start and ending time, when they happen, during the play out time of the received video are monitored and logged. At the same time also the user's behavior is implicitly tracked and logged, more in particular whether the user stays watching the video even after occurrence of such a freeze artifact. In case the user does no longer watch, the session is interrupted and this is thus an indication of the user's loyalty, in function of that particular freeze event in this particular video session. So by monitoring whether or not a user keeps watching a particular video, in the presence (or not) of freezes, an indication of the user loyalty is also obtained .

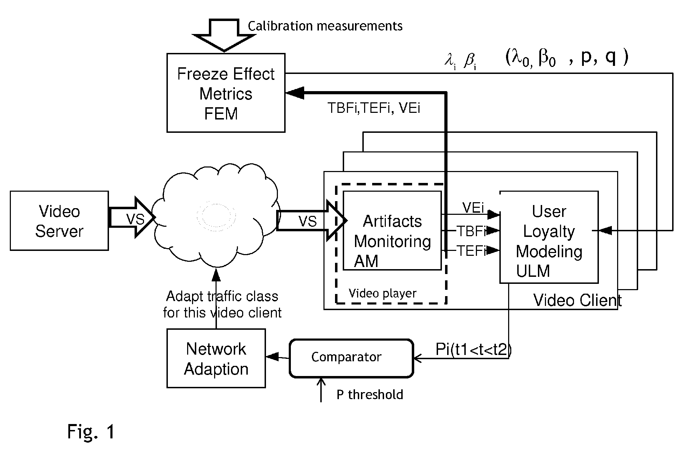

This is thus schematically shown in Fig. 1, wherein a video VS is provided by a video server to a number of clients, of which only one client is shown into detail in order not to overload the drawing, via a network depicted by a cloud. The clients thus receive the video content provided to them and play it out by means of a video player. In the embodiment depicted in Fig. 1, the video client comprises an Artifacts Monitoring module AM which is capable of detecting the artifacts during the video playback. This may be realized as a video player plug in software that may be coupled to or installed in a video player, as is shown in Fig. 1. As each video player has its own proprietary interface, the video player plug in may need to be video player specific. It may be downloaded together with the video player in case of embedded in a web browser. It can also be an independent software module that can be installed after the installation of the video player , or can be downloaded or installed from software on a software memory device, on a hardware video player.

The AM is able to detect the number, duration, moment in time of freeze. In some more advanced versions, suitable for http adaptive streaming received (abbreviated by HAS) videos also HAS quality changes occurring in the video delivery related to such a freeze , can also be monitored. These specific embodiments will monitor the playback status of the video player. When it detects a quality change or freeze, it will log it into a report.

When the AM is only monitoring the freezes, the respective start and stop time of a particular freeze are thus measured. The start time of freeze i is denoted TBFi, and the stop time of freeze i is denoted TEFi. Also the information whether or not a video session is interrupted by the user after the ith freeze, denoted by VEi in Fig. 1, is monitored.

These parameters are provided to a user loyalty modeling module ULM, which, in an embodiment as that shown in Fig. 1, is also residing at the client's side. ULM is adapted to calculate the user's loyalty based on the detected artifacts, using a new model , which will be further explained into detail in further paragraphs. The user's loyalty is only an intermediate internal parameter of the ULM module, the output provided by the ULM module is the probability of a user terminating the present video session in the next period of time, after occurrence of the last freeze i. In a typical example this next time period can be e.g. 20s. This probability is indicated in Fig. 1 as Pt(n) with t indicating a time after the occurrence of the n-th freeze. This value thus gives an indication of the probability that a user is going to terminate this video session with 20 seconds, after freeze n. E.g. if the output is 80%, it means the probability for the user to quit this video session within 20 seconds is 80%. A probability of 80% exceeds a predetermined threshold value $P_T$ of e.g. 50% which may have been set previously by a network operator.

The output of the ULM is compared with this threshold value in a comparator module, where the Threshold value is a network-operator input parameter. Upon exceeding the threshold value the network will be adapted .

This threshold however depends on the requirement of the network operator. For example, if the network has redundant capacity, the operator could adapt the network for the user even if the termination probability is low, 50%; but if the network is already close to congestion, this threshold could be higher, e.g 90%, the adaptation is taken.

Upon exceeding this threshold value, the network will thus be adapted by means of a network adaptation module receiving from the comparator a trigger whether or not to change network conditions.

There are various ways to improve the network . For instance the network operation can assign temporarily the traffic of a specific client to a higher class by using Diffserv service, as is shown in Fig. 1.

After the video session is really finished all artifacts are sent into another module denoted FEM, Freeze Effect Metrics. This module will, based upon the real watching behavior of the client further update some model parameters, which are provided to the User Loyalty Modeling module .

The ULM module can again be either located at the client side or at the network side. If the session is truly stopped then the freeze effect metrics modeling part will re-visit the whole session, and update the relevant parameters in the model.

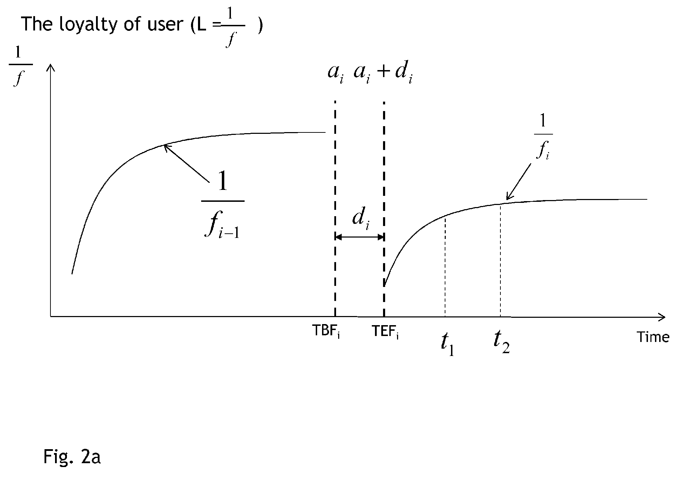

The user loyalty model used within the ULM and FEM modules will now be further discussed into detail, by means of Figs 2a-c.

Fig. 2a shows the loyalty L of a user as a function of time , in the presence of one freeze i. As can be observed the loyalty L steeply increases during the initial watching period (after the previous freeze, or initial if i=1), and then reaches a saturation value. A freeze occurring at time TBFi, with a duration of di, and ending at TEFi , will of course decrease the loyalty , as can be observed from Fig. 2a. After this sudden decrease the loyalty gradually increases again.

The model that is used for this invention actually tries to model the inverse function of the loyalty function, this inverse function being denoted by f (so the loyalty then being L=1/f).

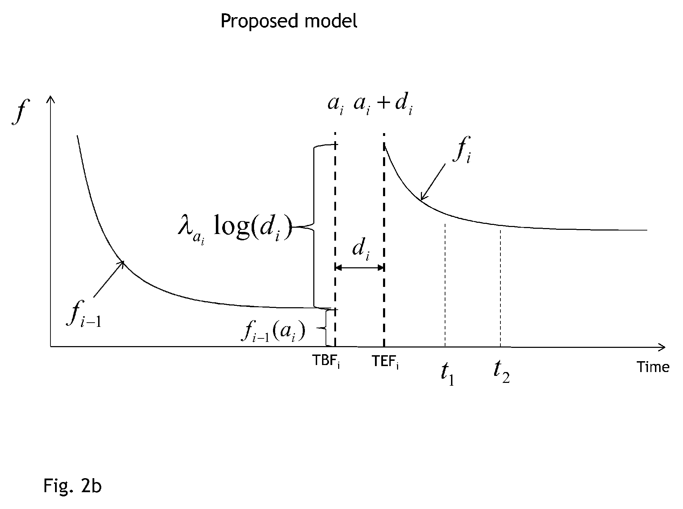

In order to try to approximate f, a function of the form of f=exp(-t/S) is chosen , wherein S represents the freeze parameters, and t is the time. This is shown in Fig. 2b, which thus plots $f_i$ as a function of time, after the presence of an i-th freeze (thus meaning that these i freezes so far did not lead to users stop watching)

The *i*-th freeze takes place between TBFi and TEFi, with TBFi also equal to $a_i$ second, and has a duration $d_i$. Thus TEFi= $a_i + d_i$.

From Fig. 2b it can be observed that the function $f_i$ for t= $a_i + d_i$ can be written as

$$f_i ( a_i + d_i ) = f_{i-1} (a_i) + \lambda_{ai} \log (d_i) \qquad (1)$$

With $\lambda_{ai}$ representing a fitting parameter, depending on i (the number of the freeze in the video, $a_i$ and $d_i$.

$f_{i-1}$ represents the function before the ith freeze, thus after the i-1th freeze

$f_i$ represents this function after this ith freeze, to take into account the discontinuity of the function at the freeze.

This then leads to the following model :

$$f_i(t) = [\lambda_{a_i} \log(d_i) + f_{i-1}(a_i)]e^{-\frac{t-a_i}{[\lambda_{a_i} \log(d_i)+f_{i-1}(a_i)]\beta_i}}$$

$$(2)$$

With fi(t) representing the value of f after freeze i

With fi-1(t) representing the value of f after freeze i-1

With $\lambda_{ai}$ and $\beta i$ representing fitting parameters depending on i

In this equation (2), there are thus two sets of parameters : $\lambda_i$ describes the freeze effect at position *i* and $\beta_i$ represents the concurrent effect of consecutive freezes.

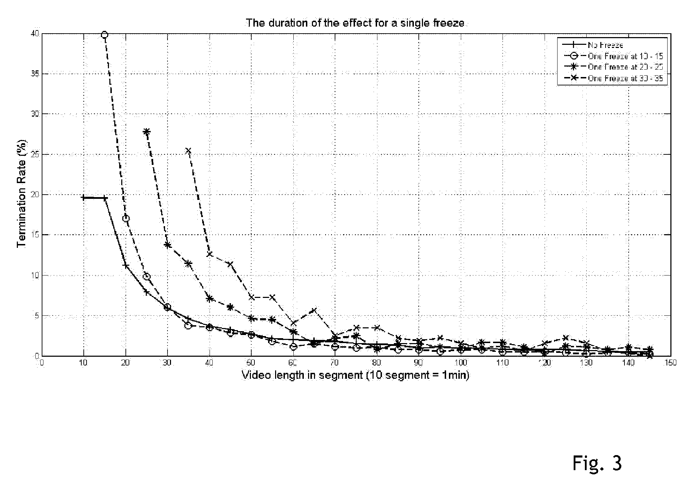

These are determined on statistical information from user's watching behavior in the presence of freezes. In Fig. 1 this information is denoted "calibration measurements" which thus show the loyalty of a statistically representative number of users watching a set of videos with varying freeze conditions. Results of such calibration measurements are for instance shown in Fig. 3.

One can for instance see that a single, initial freeze kills the session.

The two sets of parameters are thus learned from a training set of session logs. The training set is divided into a series of subsets according to the number of freezes, the position of freezes, and the durations of freezes. To optimize the parameters $\lambda_i$ and $\beta_l$, the different impact of freeze when it is at different places and different duration is thus measured , by means of applying different subsets, assuming that in each subset the freezes have the same impact.

From these calibration measurements it was observed that $\lambda_i$ is likely to linearly decrease in the beginning of a video session, but does not keep decreasing at that same pace after a certain engagement (e.g 10 minutes)

This can be expressed as :

$$\lambda_i = \lambda_0 - p*i \text{ if } t < 600; \ \lambda_i = \lambda_{600} \text{ if } i >= 600 \qquad (3)$$

With p a fitting parameter for optimization based on the training set of measurements

The effect of freeze position thus linearly decreases until the video engagement reaches a certain threshold value. This can intuitively be understood from that fact that, after a long enough engagement , e.g. 10 minutes, user interests has already dominated the video session; and freeze artifacts have become secondary factors for the engagement, for this type of users. A freeze occurring at 20 minutes thus has the same impact as the freeze occurring at 60 minutes.

$\beta_i$ is a parameter for representing the effect of multiple freezes, as our experiments also suggested that frequent freezes increase the risk of session termination. From our study, we could roughly see that this concurrent effect is linearly increasing with the number freezes.

$$\beta_i = \beta_{i-1} + q \qquad (4)$$

Based on the actual freeze parameters which are then provided into the ULM module, and based on the fitting parameters also provided to this ULM module from the FEM module, a probability of a user terminating the session within the next T seconds after the last observed freeze, is calculated.

This probability is also statistically calculated during the calibration measurements such that $\lambda_i$ and $\beta_i$ are optimized by using curve-fitting techniques to best fit the termination rate curve in a training subset.

Using the model, the probability that the session will terminate between t1 and t2 after i freezes have happened can be calculated as:

$$P_i(t_1 < t < t_2) = \frac{\int_{t_1}^{t_2} f_i(x)dx}{\int_{a_i}^{+\infty} f_i(x)dx} \qquad\qquad (5)$$

This probability thus represents the probability a user will stop watching the video session between t1 and t2 , after the i-th freeze.

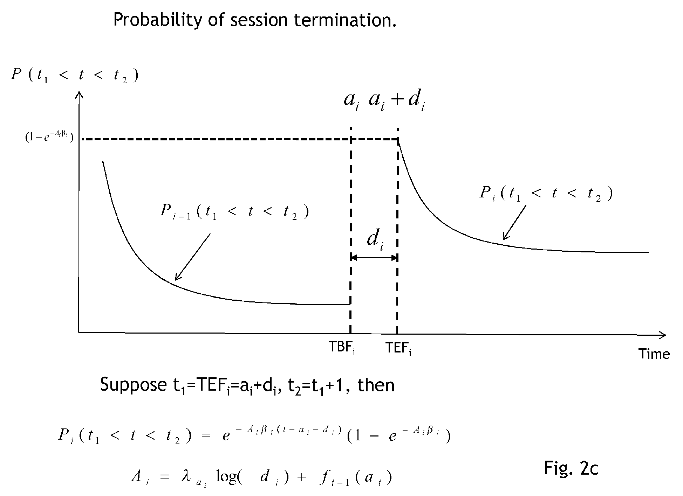

These time values t1 and t2 are also indicated in Fig. 2b, and Fig. 2c also shows an exemplary plot of such a probabilitistic termination rate curve P.

In a typical example , the start time of the ith freeze (TBFi, 0<i<N) and the stop time of the ith freeze (TEFi, 0<i<N) will be fed into the User Loyalty Modeling module. Using expressions (1) to (5) the probability that the session will terminate between t1 and t2 after i freezes have happened is calculated . For a typical video client, we are for instance interested in knowing the probability that a video session will be terminated within the next 5 seconds, after the latest freeze. These t1 and t2 values are normally input values, either default installed into the ULM, or otherwise, especially for network implementations of AM,ULM and FEM, provided by an operator, based on his own experience. These values may be different for different video clients, thus may vary from user to user.

If we use a typical value of 5 seconds, Pt(5) is calculated by the ULM, and provided to a comparator for comparing this to a predetermined threshold value (e.g. 50%...) . If this threshold is exceeded, the comparator will provide a trigger to the Network Adaptation module.

There are various ways to adapt the network traffic, e.g. shaping, diffserv, vlan, etc. It will be obvious for an engineer with traffic engineering experience to take the proper adaptation method respectively. In this case, we assume to use the Diffserv class to adapt the network traffic. Suppose a Pt(5) is higher than a threshold defined inside the network adaption module. This internal threshold is used to help this module to decide where to classify this video cleint's traffic. The value of the threshold comes from historical experience. It can also be evolved and adapted. Pt(5) higher than the threshold means the probability of termination is not acceptable. In this case, the Network Adaptation is going to assign this video client's traffic from Best Effort class to Assured Forwarding class. Since the Assured Forwarding class has higher priority in traffic routing than the Best Effort class, the chance that video segment transmission from the server to the client being blocked reduces a lot. In this way, the video client is able to sustain and even improve the video quality during the play out. On the other hand, if the Pt(5) is lower than the threshold, the video traffic will then be offloaded from the Assured Forwarding class back to the Best Effort class.

While the principles of the invention have been described above in connection with specific apparatus, it is to be clearly understood that this description is made only by way of example and not as a limitation on the scope of the invention, as defined in the appended claims.

**Claims**

1. Method for assessing the quality of a video session at a user client (video client) for a user watching a video stream (VS) received at said user client , said method comprising the steps of performing measurements of said video session for logging freeze parameters (TBFi, TEFi) upon detecting freeze occurrences taking place during play out of said video stream by a video player at said user client, for further deriving from said measurements a session interrupt indication (VEi) by detecting whether the user is further watching said video stream or not after one of said detected freeze occurrences, a step of calculating from said freeze parameters and from said session interrupt indication (VEi) a user loyalty probability parameter ($P_i$(t1 <t<t2)) reflecting the probability that said user will terminate the video session within a predetermined period (t2-t1) after the latest detected freeze (i) as a quality parameter of said video session.

2. Method according to claim 1 further comprising a step of comparing said user loyalty probability parameter ($P_i$(t1 <t<t2)) with a threshold, and, upon exceeding of said threshold, adapting the video session and/or next video sessions to said user client by increasing its priority.

3. Method according to claim 1 wherein said calculation is further based on fitting parameters ($\lambda_i$ , $\beta_i$)of a function ($f_i$(t)) and whereby said function is calibrated via initial measurements on several test video sequences , thereby determining initial parameters ($\lambda_0$, $\beta_0$, p, q) of said function.

4. Method according to any of the claims 1 to 3 wherein said measurements are performed at said user client.

5. Method according to any of the claims 1 or 3 wherein said measurements are performed in an intermediate node between a transmitter of the video steam and said user client.

6. Method according to claim 3, wherein said function is of the form :

$$f_i(t) = [\lambda_{a_i} \log(d_i) + f_{i-1}(a_i)]e^{-\frac{t-a_i}{[\lambda_{a_i} \log(d_i)+f_{i-1}(a_i)]\beta_i}}$$

With fi(t) representing the value of f after freeze i With fi-1(t) representing the value of f after freeze i-1 With $\lambda_{ai}$ and $\beta$i representing fitting parameters depending on i

7. Method according to claim 6 wherein said loyalty probability parameter is expressed as :

$$P_i(t_1 < t < t_2) = \frac{\int_{t_1}^{t_2} f_i(x)dx}{\int_{a_i}^{+\infty} f_i(x)dx}$$

8. Computer program comprising software to perform the steps of the method in accordance to any of the claims 1 to 7.

9. Device (AM, ULM) to assess the quality of a video session during play out of a video stream by a video player at a user client, said device comprising an artifacts monitoring module (AM) adapted to perform measurements of said video session for logging freeze parameters (TBFi, TEFi) upon detecting freeze occurrences taking place during the play out of said video stream by said video player at said user client, and for obtaining a session interrupt indication (VEi) by detecting whether the user is further watching said video stream or not after one of said detected freeze occurrences, and to provide said freeze parameters (TBFi, TEFi) and said session interrupt indication (VEi) to a user loyalty modeling module (ULM) of said device, said user loyalty modeling module being adapted to calculating from said freeze parameters and from said session interrupt indication (VEi) a user loyalty probability parameter ($P_i$(t1 <t<t2)) reflecting the probability that said user will terminate the video session within a predetermined period (t2-t1) after the latest detected freeze (i) as a quality parameter of said video session for providing as an output of said device.

10. Device (AM, ULM, FEM) according to claim 9 wherein said user loyalty modeling module (ULM) is further adapted to calculate said quality parameter based on fitting parameters ($\lambda_i$, $\beta_i$)of a function ($f_i$ (t)), and whereby said fitting parameters are determined by a calibration module (FEM) of said device, said calibration module adapted to receive several test measurements from test video sequences and to determine therefrom initial values ($\lambda_0$, $\beta_0$, p, q) of said fitting parameters of said function.

11. Device according to claim 9 wherein said artifacts monitoring module (AM)is further adapted to provide said measurements comprising said freeze parameters (TBFi, TEFi) and said session interrupt indication (VEi) to said calibration module (FEM), said calibration module further being adapted to update said fitting parameters based on said measurements, for further provision to said user loyalty modeling module.

Calibration measurements

Freeze Effect
Metrics
FEM

$\lambda_i \; \beta_i \qquad (\lambda_0, \beta_0 \; , p, q )$

TBFi,TEFi, VEi

Video
Server

VS

VS

Artifacts
Monitoring
AM

VEi

TBFi

TEFi

User
Loyalty
Modeling
ULM

Video player

Video Client

Adapt traffic class
for this video client

Network
Adaption

Comparator

Pi(t1<t<t2)

P threshold

Fig. 1

The loyalty of user $(L = \frac{1}{f}\ )$

$\frac{1}{f}$

$a_i \quad a_i + d_i$

$\frac{1}{f_{i-1}}$

$d_i$

$\frac{1}{f_i}$

TBF$_i$    TEF$_i$    $t_1$    $t_2$      Time

Fig. 2a

Proposed model

Fig. 2b

Probability of session termination.

$P\ (\ t_1\ <\ t\ <\ t_2\ )$

$a_i\ \ a_i + d_i$

$(1 - e^{-A_i\beta_i})$

$P_{i-1}(\ t_1\ <\ t\ <\ t_2\ )$

$P_i(\ t_1\ <\ t\ <\ t_2\ )$

$d_i$

TBF$_i$     TEF$_i$

Time

Suppose t$_1$=TEF$_i$=a$_i$+d$_i$, t$_2$=t$_1$+1, then

$$P_i\ (\ t_1\ <\ t\ <\ t_2\ )\ =\ e^{-A_i\beta_i(t-a_i-d_i)}(1\ -\ e^{-A_i\beta_i})$$

$$A_i\ =\ \lambda_{a_i}\ \log(\ d_i)\ +\ f_{i-1}(a_i)$$

Fig. 2c

Fig. 3

Europäisches
Patentamt

European
Patent Office

Office européen
des brevets

# EUROPEAN SEARCH REPORT

Application Number

EP 14 30 5323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/290492 A1 (ELARABAWY AHMED [US] ET AL) 31 October 2013 (2013-10-31)<br>* paragraph [0130]; figure 4 *<br>* paragraph [0131] *<br>* paragraph [0132] *<br>* paragraph [0128] *<br>* paragraph [0073] * | 1-11 | INV.<br>H04N17/00<br>H04N21/442 |
| T | "Objective perceptual multimedia video quality measurement in the presence of a full reference; J.247 (08/08)",<br>ITU-T STANDARD, INTERNATIONAL TELECOMMUNICATION UNION, GENEVA ; CH,<br>no. J.247 (08/08),<br>13 August 2008 (2008-08-13), XP017433984,<br>* C.2, C.4, C.5.6 * | 1-11 | |
| X | WO 2012/136633 A1 (TELEFONICA SA [ES]; LOZANO LOPEZ JOSE ANTONIO [ES]; GONZALEZ MUNOZ JUA) 11 October 2012 (2012-10-11)<br>* page 2, line 15 - line 23; claims 1,4 * | 1,8,9 | |

TECHNICAL FIELDS
SEARCHED       (IPC)

H04N

The present search report has been drawn up for all claims

| Place of search | Date of completion of the search | Examiner |
|---|---|---|
| Munich | 28 May 2014 | Thieme, Markus |

EPO FORM 1503 03.82 (P04C01)

**EP 2 916 544 A1**

**ANNEX TO THE EUROPEAN SEARCH REPORT
ON EUROPEAN PATENT APPLICATION NO.**                    EP 14 30 5323

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2014

| Patent document cited in search report | Publication date | Patent family member(s) | Publication date |
|---|---|---|---|
| US 2013290492 A1 | 31-10-2013 | NONE | |
| WO 2012136633 A1 | 11-10-2012 | EP 2695331 A1<br>ES 2397741 A1<br>WO 2012136633 A1 | 12-02-2014<br>11-03-2013<br>11-10-2012 |

EPO FORM P0459

For more details about this annex : see Official Journal of the European Patent Office, No. 12/82

14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 13305743 A

- EP 2525587 A